# EUROPEAN PATENT SPECIFICATION

(11) **EP 3 445 819 B1**
(45) Date of publication and mention of the grant of the patent: **12.10.2022**
(21) Application number: 17722925.9
(22) Date of filing: 19.04.2017
(51) Int. Cl.: C08L 27/06

(54) **METHOD FOR IMPROVING THE MELT STRENGTH OF AN ORIENTED POLYVINYL CHLORIDE COMPOSITION**
VERFAHREN ZUR VERBESSERUNG DER SCHMELZFESTIGKEIT EINER AUSGERICHTETEN POLYVINYLCHLORIDZUSAMMENSETZUNG
PROCÉDÉ D'AMÉLIORATION DE LA RÉSISTANCE À L'ÉTAT FONDU D'UNE COMPOSITION DE POLY(CHLORURE DE VINYLE) ORIENTÉE

(30) Priority: 20.04.2016 US 201662325040 P; 05.01.2017 US 201762442526 P
(43) Date of publication of application: 27.02.2019
(73) Proprietor: Rohm and Haas Company, Collegeville, PA 19426 (US)
(72) Inventor: PETR, Michael T., Collegeville, PA 19426 (US)
(74) Representative: Houghton, Mark Phillip
(86) International application number: PCT/US2017/028340
(87) International publication number: WO 2017/184714

(56) References cited:
- WO-A1-2011/045991
- JP-A- 2015 089 895
- US-A- 4 692 295
- US-A- 4 797 426
- Rohm And Haas: "PARALOID(TM) K120N-K120ND Acrylic Processing Aid The Industry Standard for Controlled Fusion, Optimum Processing and Product Quality", , 1 January 2007 (2007-01-01), XP055382400, Retrieved from the Internet: URL:http://www.dow.com/assets/attachments/ business/plastics_additives/paraloid_k/par aloid_k-120nd_er/tds/paraloid_k-120nd_er.p df [retrieved on 2017-06-16]

## Description

### FIELD OF THE INVENTION

This invention relates generally to methods of improving the melt strength of oriented polyvinyl chloride compositions by adding acrylic polymers that contain polymerized units derived from methyl methacrylate and C₂-C₆ alkyl (meth)acrylate monomers, and have a M*_{w}*/GPC-PS of 4 × 10⁶ g/mol or greater.

### BACKGROUND

Oriented polyvinyl chloride ("o-PVC") pipes offer significant improvements over regular polyvinyl chloride ("PVC") pipes by maintaining burst and impact strength of the pipe while reducing its weight. To produce the o-PVC pipe, a regular pipe is extruded at half the desired final diameter and then stretched in the hoop direction to, for example, twice the original diameter. In doing so, the thickness of the pipe wall is also reduced by half, and the PVC chains align and orient, which increases the strength of the PVC material. Therefore, given a desired pipe diameter, an o-PVC pipe is half the weight and requires half the raw material of a regular PVC pipe, yet it maintains the same or better strength.

Despite its huge improvement over regular PVC, o-PVC has encountered obstacles due to the economics of the process. Typically, o-PVC is made in a semi-batch process, whereby the pipe is extruded, cut into sections, heated to 100°C, and pressurized to expand. The labor and equipment required in such a process greatly increases the cost of o-PVC pipe. Alternatively, a continuous process can be utilized, whereby the extruded pipe is cooled to 100°C and stretched over a mandrel. Though less expensive, the continuous process can only run at one third the rate of the extrusion process, which is limited by breaking of the PVC melt during stretching before achieving the full strain necessary to double the pipe diameter.

Process aids have been utilized in the art. For example, U.S. Patent No. 4,692,295 discloses certain PVC process aids containing a homopolymer of a vinyl monomer or a copolymer of at least two vinyl monomers for achieving orientation in a thermoplastic resin.

U.S. Patent No. 6,391,976 discloses a PVC foam process aid containing methyl methacrylate and C₃-C₅ methacrylic esters. The prior art does not, however, disclose a process aid according to the present invention, which achieves increased melt strength enabling a greater run rate for the continuous stretching of the pipe compound without leading to breakage of the PVC compound prior to achieving full strain.

Accordingly, there is a need to develop methods for processing o-PVC that do not suffer from the drawbacks of the prior art, namely, providing significant improvements in melt strength while allowing for an increased run rate in the continuous stretching of PVC pipe.

### STATEMENT OF INVENTION

The invention is set out in the appended claims. The invention provides a method for improving the melt strength of a thermoplastic polymer composition comprising a polyvinyl chloride formulation during an orientation process, comprising adding an acrylic copolymer to the thermoplastic polymer composition, wherein the acrylic copolymer comprises polymerized units derived from (i) 82weight % of methyl methacrylate monomer, and (ii) 18 weight % of butyl acrylate monomer, based on the total weight of monomers in the acrylic copolymer, wherein the acrylic copolymer is present in the thermoplastic composition in an amount of from 8 to 12 weight %, based on the total weight of the thermoplastic composition, and has a M*_{w}*/GPC-PS of 4 × 10⁶ g/mol or more, wherein M_{w}/GPC-PS refers to the weight average molecular weight as measured against polystyrene calibration standards via gel permeation chromatography with a refractive index detector following ASTM D5296-11 (2011), and using tetrahydrofuran as the mobile phase and diluent. In certain embodiments, the polyvinyl chloride formulation comprises a polyvinyl chloride and a component selected from the group consisting of internal lubricants, external lubricants, stabilizers, inorganic fillers, and combinations thereof.

### DETAILED DESCRIPTION

The inventors have now surprisingly found an improved method for orienting thermoplastic polymer compositions comprising a polyvinyl chloride formulation by adding an acrylic copolymer comprising polymerized units derived from methyl methacrylate and butyl acrylate having a M*_{w}*/GPC-PS of 4 × 10⁶ g/mol. The inventive method provides significant improvements in melt strength allowing for an increased run rate in the continuous stretching of PVC compounds without leading to premature breakage.

As used herein, the term "polymer" refers to a polymeric compound prepared by polymerizing monomers, whether of the same or a different type. The generic term "polymer" includes the terms "homopolymer," "copolymer," "terpolymer," and "resin." As used herein, the term "polymerized units derived from" refers to polymer molecules that are synthesized according to polymerization techniques wherein a product polymer contains "polymerized units derived from" the constituent monomers which are the starting materials for the polymerization reactions. As used herein, the term "(meth)acrylate" refers to either acrylate or methacrylate or combinations thereof, and the term "(meth)acrylic" refers to either acrylic or methacrylic or combinations thereof. As used herein, the term "substituted" refers to having at least one attached chemical group, for example, alkyl group, alkenyl group, vinyl group, hydroxyl group, carboxylic acid group, other functional groups, and combinations thereof.

As used herein, the term "phr" means per hundred parts resin or polymer solids, and, unless otherwise indicated, refers to the polyvinyl chloride.

As used herein, the term "weight average molecular weight" or "M*_{w}*" refers to the weight average molecular weight of a polymer as measured by gel permeation chromatography ("GPC"), for acrylic polymers. As used herein, the term "M*_{w}*/GPC-PS" refers to the M*_{w}* as measured against polystyrene calibration standards via GPC with a refractive index detector following ASTM D5296-11 (2011), and using tetrahydrofuran ("THF") as the mobile phase and diluent. As used herein, the term "M*_{w}*/GPC-MALS" refers to the M*_{w}* as measured via GPC with multi-angle light scattering detection.

The inventive oriented thermoplastic polymer compositions comprise a polyvinyl chloride formulation and an acrylic copolymer. In certain embodiments, the polyvinyl chloride formulation comprises a polyvinyl chloride and one or more of internal lubricants, external lubricants, stabilizers, and inorganic fillers. In certain embodiments, the polyvinyl chloride formulation is present in an amount of from 80 to 99 weight %, preferably of from 88 to 97 weight %, and more preferably of from 92 to 96 weight %, based on the total weight of the thermoplastic composition. In certain embodiments, the acrylic copolymer is present in the thermoplastic composition in an amount of from 1 to 20 weight %, preferably of from 3 to 12 weight %, and more preferably of from 4 to 8 weight %, based on the total weight of the thermoplastic composition.

The polyvinyl chloride of the inventive method has a degree of polymerization of from 600 to 1,500 and a weight average molecular weight in the range of from 40,000 to 90,000 g/mol, and can be obtained by conventional suspension polymerization, emulsion polymerization, bulk polymerization, or solution polymerization in the presence of initiators. In certain embodiments, the polyvinyl chloride is present in the thermoplastic composition in an amount of from 74 to 90 weight %, preferably of from 80 to 89 weight %, and more preferably of from 84 to 87 weight %, based on the total weight of the thermoplastic composition.

Suitable examples of internal lubricants, include, for example, small molecule esters or oxidized polyethylene. In certain embodiments, the internal lubricants are present in the thermoplastic composition in an amount of from 0.1 to 5 weight %, preferably of from 0.1 to 1 weight %, and more preferably of from 0.2 to 0.5 weight %, based on the total weight of the thermoplastic composition. Suitable examples of external lubricants, include, for example, salts of fatty acids, such as calcium stearate, waxes, and polymeric lubricants. In certain embodiments, the external lubricants are present in the thermoplastic composition in an amount of from 0.1 to 10 weight %, preferably of from 0.2 to 5 weight %, and more preferably of from 0.5 to 1.5 weight %, based on the total weight of the thermoplastic composition. Suitable example of stabilizers, include, for example, organometallic or metallic compounds, such as methyl tin mercaptides, metal carboxylates, such as calcium stearate, calcium acetoacetonate, zinc acetonacetonate, and heavy metal salts, such as lead carbonate or lead sulfate. In certain embodiments, the stabilizers are present in the thermoplastic composition in an amount of from 0.1 to 10 weight %, preferably of from 0.3 to 5 weight %, and more preferably of from 0.5 to 1.5 weight %, based on the total weight of the thermoplastic composition. Suitable examples of inorganic fillers, include, for example, calcium carbonate, calcium sulfate, titanium dioxide, silica, talc, kaolinite, and other silicates. In certain embodiments, the inorganic fillers are present in the thermoplastic composition in an amount of from 0.1 to 50 weight %, preferably of from 1 to 25 weight %, and more preferably of from 4 to 8 weight %, based on the total weight of the thermoplastic composition.

The acrylic copolymer of the inventive method comprises polymerized units derived from methyl methacrylate and butyl acrylate. The methyl methacrylate monomer is present in the acrylic copolymer in an amount of 82 weight %, based on the total weight of the acrylic copolymer. The butyl acrylate monomer is present in the acrylic copolymer in an amount of 18 weight %, based on the total weight of the acrylic copolymer.

The acrylic copolymers described herein provide improved properties to the inventive oriented thermoplastic polymer compositions including, for example, providing an increased melt strength while allowing for an increased run rate in the continuous stretching of PVC compounds without leading to premature breakage. Melt strength is proportional to the molecular weight of a process aid. *See, e.g.,* J.P. Disson and S. Girois, J. Vinyl & Additive Tech., 9, No. 4, 177-185 (2003). In certain embodiments, the acrylic copolymers of the present invention have a M*_{w}*/GPC-PS of 4 × 10⁶ g/mol or more, or 5 × 10⁶ g/mol or more, or 6 × 10⁶ g/mol or more, or 7 × 10⁶ g/mol or more. In certain embodiments, the acrylic copolymers of the present invention have a M_{w}/GPC-PS of 4 × 10⁷ g/mol or less, or 2 × 10⁷ g/mol or less, or 1 × 10⁷ g/mol or less, or 8 × 10⁶ g/mol or less.

In general, the acrylic copolymers are formed by aqueous emulsion or suspension polymerization in the presence of an initiator, such as a thermal initiator like a peracid, e.g., persulfate, or a peroxide, or a redox pair, such as a peracid or peroxide and a reducing agent like a bisulfite or an organic sulfoxylate. Such polymerization methods are conventional in the art such as, for example, U.S. Patent Nos. 4,325,856, 4,654,397, and 4,814,373. In emulsion or suspension polymerization, monomer mixture(s) may be added neat or as an emulsion in water. In suspension polymerization, no surfactant or emulsifier is used. Such monomer mixtures may be added as a shot or fed, as in gradual addition polymerization. A monomer mixture may be added in one or more additions and may be added continuously over all or part the reaction period or not continuously, such as over all or part of the reaction period. One or more monomer mixture can be added linearly, such as in the case of gradual addition (grad add), or not, such as, for example, in semi-continuous polymerization or addition all at once as a "shot", or in any combination thereof.

In emulsion polymerization, conventional surfactants may be used such as, for example, anionic and/or nonionic emulsifiers such as, for example, alkali metal or ammonium salts of alkyl, aryl, or alkylaryl sulfates, sulfonates or phosphates; alkyl sulfonic acids, sulfosuccinate salts; fatty acids; ethylenically unsaturated surfactant monomers; and ethoxylated alcohols or phenols. The amount of surfactant used is usually 0.1% to 6% by weight, based on the weight of monomer, or higher to make a higher M*_{w}* polymer. The same surfactants and amounts thereof are used in both single stage and in multi-stage emulsion polymerization processes. Either thermal or redox initiation processes may be used in either single stage or multi-stage emulsion polymerization processes. Known free radical initiators such as, for example, peroxides, ammonium and/or alkali persulfates or redox pairs, may be used at a level of from 0.01 to 3.0 weight %, based on the weight of total monomer, or lower to make a higher M*_{w}* polymer stage. Redox systems using the same initiators may be coupled with a suitable reductant such as, for example, (iso)ascorbic acid, alkali metal and ammonium salts of sulfur-containing acids, such as sodium sulfite, bisulfite, formadinesulfinic acid, hydroxymethanesulfonic acid, sodium sulfoxylate formaldehyde, 2-hydroxy-2-sulfinatoacetic acid, 2-hydroxy-2-sulfonatoacetic acid, amines such as ethanolamine, glycolic acid, glyoxylic acid hydrate, lactic acid, glyceric acid, malic acid, tartaric acid and salts of the preceding acids.

To make higher M*_{w}* polymers or polymer stages, one or more monomer mixtures should be added as a "shot" to the reactor or initially charged in the reactor at the beginning of one or more reaction stage. Preferably, to make a high M*_{w}* polymer stage, one can start the polymerization reaction cold or at room temperature, use a compatible seed polymer, lower the concentration of initiator, raise the concentration of surfactants or emulsifiers, use a redox pair as a radical initiator, or any combination thereof. More preferably, one starts the polymerization reaction cold or at room temperature and either uses shot polymerization and/or a redox initiator.

The acrylic copolymers are isolated by coagulation or spray drying to form a powder. Coagulation can be carried out by various coagulation methods known in the art, such as aqueous electrolyte (salt) coagulation using an aqueous solution of a salt of an inorganic acid, such as sodium chloride, magnesium acetate, calcium hypophosphite. Preferably, the electrolyte solution is prepared with a salt containing a divalent cation, such as calcium chloride (CaCl₂). Coagulation with a water soluble, or partially water soluble solvent, such as methanol and the like ("methanol-coagulation") is also possible. Suitable techniques for spray drying the polymer beads of the present invention are known in the art, for example, as described in US 2014/0113992 A1. In certain embodiments, anti-caking agents are used when spray drying the acrylic copolymers. Suitable anti-caking agents include, for example, mineral fillers (e.g., calcium carbonate, kaolin, titanium oxide, talc, hydrated alumina, bentonite, and silica), solid polymer particles with a *T*_{g} or *T*ₘ greater than 60°C (e.g., polymethylmethacrylate, polystyrene, and high density polyethylene), and water soluble polymers with a *T*_{g} greater than 60°C (e.g., polyvinyl alcohol and methylcellulose). The anti-caking agent can be mixed in the acrylic suspension prior to spray drying or introduced as a dry powder in the spray drying process. In certain embodiments, anti-dust agents are used when spray drying the acrylic copolymers. Suitable anti-dust agents include, for example, low glass transition temperature polymers, such as poly(ethyl acrylate), poly(butyl acrylate), or copolymers thereof, waxes, and surfactants.

Another variation of the present invention includes adding one or more other known acrylic copolymer compositions, in either powder or aqueous slurry form. These additives can be blended using standard equipment such as high-speed mixers, blenders, kneaders, extruders, fluidized drying beds, spray nozzles, as mixing equipment.

Other ingredients typically blended in oriented thermoplastic formulations, such as lubricants, thermal stabilizers, waxes, dyes, pigments, fillers, may each have an aqueous solution, liquid, powdered, or pellet form, and may be included in the present invention using this mixing equipment. The amount of optional ingredients effective for achieving the desired property provided by such ingredients can be readily determined by one skilled in the art.

The polymeric additive powders may be used in various ways, including preparation of thermoplastic polymer compositions. The thermoplastic polymer compositions contain polyvinyl chloride and the polymeric additive powder. These blends are readily prepared by melt-blending methods that are known in the art of plastics processing. For example, the polymeric additive powders can be blended with vinyl chloride polymer powders or pellets and melt processed using an extruder.

The acrylic copolymers find use in processing of polyvinyl chloride. The thermoplastic polymer compositions can also be blended with higher amounts of the polymeric additives powders for preparing concentrated pellets of the polymeric additive powders. The thermoplastic polymer compositions may also be formed into pellets by the steps of blending, extruding and pelletizing using conventional plastics processing equipment.

The oriented thermoplastic polymer compositions have many uses, including pipes and other extruded articles.

Some embodiments of the invention will now be described in detail in the following Examples.

### EXAMPLES

### Example 1

### Preparation of Exemplary and Comparative Copolymers

Exemplary and comparative acrylic copolymers contain the components recited in Table 1.

**Table 1. Exemplary Acrylic Copolymers**

| **Sample** | **Monomer (wt %)** |
|---|---|
| P1 | 82 MMA / 18 BA |
| P2 Comparative | 60 MMA / 40 BMA |
| P3 Comparative | 82 MMA / 18 EA |

| | |
|---|---|
| MMA = methyl methacrylate BA = butyl acrylate BMA = butyl methacrylate EA = ethyl acrylate | |

Acrylic copolymers P1-P3 were synthesized with appropriate changes in monomer amounts as recited in Table 1 as follows. Conventional aqueous emulsion polymerization was used to make them. An emulsion of monomers, a surfactant (DOWFAX 2A1, an alkyldiphenyloxide disulfonate surfactant which is commercially available from The Dow Chemical Company (Midland, MI, USA)), and water was mixed and added to a reaction flask. After inerting the contents, polymerization was initiated with a sodium formaldehyde sulfoxylate and sodium persulfate redox initiator system catalyzed by an iron salt. Upon completion of the polymerization, the latex was cooled and dried.

### Example 2

### Molecular Weight Characterization of Exemplary and Comparative Copolymers

Exemplary acrylic copolymer in accordance with the present invention as synthesized in Example 1, and a comparative copolymer, were evaluated for molecular weight as shown in Table 2.

**Table 2. Molecular Weight Characterization**

| **Sample** | **M_{w}/GPC-PS (10⁶ g/mol)** | **M*_{w}*/GPC-MALS (10⁶ g/mol)** |
|---|---|---|
| P1 | 6.14 | 14.9 |
| P2 Comparative | 5.21 | 18.6 |
| P3 Comparative | 7.45 | 10.6 |
| PARALOID K-120ND^{∗} (P(EA/MMA)) Comparative | 0.74 | 1.1 |

| | | |
|---|---|---|
| ^{∗}Available from The Dow Chemical Company | | |

The M*_{w}*/GPC-PS (i.e., GPC against polystyrene calibration standards as described above) of Polymers P1-P3 and the comparative copolymer was determined following ASTM D5296-11 (2011) on an Agilent 1100 Series High Pressure Liquid Chromatograph ("HPLC") with two 20 µm MIXED-A columns and a Wyatt T-rEX refractive index detector using tetrahydrofuran as the mobile phase and diluent at 0.2 mL/min and room temperature. GPC samples were prepared in THF at a concentration smaller or equal to 0.3 mg/mL. The GPC samples were dissolved at room temperature without vigorous shaking that induces shear degradation to the polymer. Upon complete dissolution, the GPC sample solution was filtered using Whatman^{™} 1 µm PTFE filter prior to the analysis.

The M*_{w}*/GPC-MALS (i.e., GPC with multi-angle light scattering detection as described above) of Exemplary Polymers P1-P3 was determined as follows. GPC samples were prepared in a 0.3 mg/mL tetrehydrofuran/formic acid (THF/FA, 100:5 v/v) solution, gently hand-shaken, and then stored overnight at room temperature for complete dissolution. All solutions were filtered through a 1 µm Teflon filter prior to the 100 µL injections. The instrument setup consisted of Shimadzu LC-20AD LC pump and SIL-20A HT autosampler, Wyatt HELEOS Multi-angle light scattering detector, rEX refractive index detector, and two shodex 807L columns using THF/FA as the mobile phase at a flow rate of 0.2 mL/min. The Wyatt HELEOS MALS was calibrated using high pressure liquid chromatography ("HPLC") grade toluene and its angular response was calibrated using a narrow 45 kg/mol narrow poly(ethylene oxide) ("PEO") standard. Data was recorded and processed using Wyatt ASTRA^{®} v6.1 software, and weight average molecular weight (Mw) and radius of gyration (Rg or RMS) were determined at each GPC elution volume increment using Debye Plots with second order polynomial fit according to the Zimm formalism.

### Example 3

### Reduced Viscosity Characterization of Exemplary and Comparative Copolymers

Acrylic copolymers as synthesized in Example 1 were evaluated for reduced viscosity as shown in Table 3.

**Table 3. Reduced Viscosity Characterization**

| **Sample** | **Reduced Viscosity (dL/g)** |
|---|---|
| P1 | 14.2 |
| P2 Comparative | 23.0 |
| P3 Comparative | 18.9 |

The reduced viscosity was measured according to ASTM D2857-95 (2007) at 1 mg/mL in chloroform at 25°C using an I capillary tube with a 0.63 mm capillary size and a constant K of 0.01.

### Example 4

### Preparation of Exemplary and Comparative Oriented Polyvinyl Chloride Pipe Formulations

Exemplary polyvinyl chloride formulations contain the components recited in Table 4, with the loading of each acrylic copolymers P1-P3 as indicated in Table 5

**Table 4. Oriented Polyvinyl Chloride Formulation**

| **Material** | **Loading (phr)** |
|---|---|
| PVC F622¹ | 100.0 |
| ADVASTAB TM-696² (liquid methyl tin) | 0.85 |
| CaSt³ | 0.6 |
| Paraffin Wax⁴ | 1.4 |
| Oxidized PE Wax (AC 629A)⁵ | 0.3 |
| TiO₂⁶ | 0.6 |
| Calcium Carbonate (untreated)⁷ | 5.0 |
| Pigment (blue)⁸ | 0.1274 |
| PA551 (acrylic process aid)⁹ | 0.85 |
| Inventive Process Aid | X |
| **Total** | **109.7274 + X** |

| | |
|---|---|
| ¹Available from Formosa Industries, TW ²Available from The Dow Chemical Company ³Available from Ferro Corporation ⁴Available from Sasol Wax North America ⁵Available from Ferro Corporation ⁶Available from Ishihara Corporation ⁷Available from Columbia River Carbonates ⁸Available from Holland Colours Americas Inc. ⁹Available from Mitsubishi Rayon | |

**Table 5. Loading of Process Aid in Oriented Polyvinyl Chloride Formulations**

| **Example** | **P1 (phr)** | **P2 (phr)** | **P3 (phr)** | **PARALOID K-120ND (phr)** |
|---|---|---|---|---|
| E1^{∗} | 1 | -- | -- | -- |
| E2^{∗} | 1.5 | -- | -- | -- |
| E3^{∗} | 2 | -- | -- | -- |
| E4^{∗} | 3 | -- | -- | -- |
| E5^{∗} | 4 | -- | -- | -- |
| E6^{∗} | 5 | -- | -- | -- |
| E7^{∗} | 7 | -- | -- | -- |
| E8 Claimed | 10 | -- | -- | -- |
| E9^{∗} | -- | 3 | -- | -- |
| E10^{∗} | -- | 5 | -- | -- |
| E11^{∗} | -- | -- | 3 | -- |
| E12^{∗} | -- | -- | 5 | -- |
| C1^{∗} | -- | -- | -- | -- |
| C2^{∗} | -- | -- | -- | -- |
| C3^{∗} | -- | -- | -- | -- |
| C4^{∗} | -- | -- | -- | 1.5 |
| C5^{∗} | -- | -- | -- | 5 |
| C6^{∗} | -- | -- | -- | 10 |

| | | | | |
|---|---|---|---|---|
| ^{∗}Comparative | | | | |

The oriented polyvinyl chloride pipe formulations were prepared by adding the materials in Tables 4 and 5 sequentially. The components in Table 4 and respective amounts of acrylic copolymers P1-P3 and comparative process aid PARALOID K-120ND were added and shaken to mix. The powder was then milled on an electric Colin Roll Mill at 205°C with the front and back rollers at 20 rpm, respectively, for 4 minutes and then immediately pressed into a 1/8 inch thick plaque on a Reliable hydraulic press at 190°C and at 15 and 80 tons and then cooled for 4 minutes at 80 tons. Type V tensile bars were then cut from the plaques using a Leblond-Makino RMC55 CNC mill.

### Example 5

### Tensile Elongation Characterization of Exemplary and Comparative Oriented PVC

### Formulations at 100°C and 20 in/min Strain Rate

Exemplary and comparative PVC formulations as prepared in Example 4 were evaluated for tensile elongation at 100°C and a 20 in/min strain rate as shown in Table 6.

**Table 6. Elongation at Break at 100°C and 20 in/min**

| **Sample** | **Elongation at Break (%)** |
|---|---|
| E1^{∗} | 300.7 |
| E2^{∗} | 352.0 |
| E3^{∗} | 295.9 |
| E4^{∗} | 308.1 |
| E5^{∗} | 329.8 |
| E6^{∗} | 485.5 |
| E7^{∗} | 371.1 |
| E8 Claimed | 421.1 |
| E9^{∗} | 328.4 |
| E10^{∗} | 390.6 |
| E11^{∗} | 322.2 |
| E12^{∗} | 347.4 |
| C1^{∗} | 305.2 |
| C2^{∗} | 282.5 |
| C3^{∗} | 259.2 |
| C4^{∗} | 359.8 |
| C5^{∗} | 403.8 |
| C6^{∗} | 312.0 |

| | |
|---|---|
| ^{∗}Comparative | |

To test the effect of the exemplary acrylic polymers P1-P3 on oriented PVC pipe formulations as compared against blank formulations C1-C3 (i.e., containing no additive) and comparative formulations C4-C6, tensile bars as prepared in Example 4 were evaluated for one dimensional tensile elongation at 100°C and a strain rate of 20 in/min until failure. Before testing, the samples were conditioned inside a 3119-406 Environment Chamber to ensure they reached the desired temperature of 100°C. After conditioning, the Type V tensile bars were strained using an Instron 8872 Servo-Hydraulic Testing System with 25kN Dynacell load cell following the Type V sample geometry in accordance with ASTM D638.

The results in Table 6 demonstrate that inventive example E8 containing acrylic copolymer in accordance with the present invention provides oriented PVC pipe formulations exhibiting far superior elongation at break values at a given loading, when compared to oriented PVC pipe formulations prepared from comparative copolymer additives.

### Example 6

### Tensile Elongation Characterization of

### Oriented PVC

### Formulations at 100°C and 50 in/min Strain Rate

PVC formulations as prepared in Example 4 were evaluated for tensile elongation at 100°C and a 50 in/min strain rate as shown in Table 7.

**Table 7. Elongation at Break at 100°C and 50 in/min**

| **Sample** | **Elongation at Break (%)** |
|---|---|
| C1^{∗} | 192.3 |
| E6^{∗} | 425.2 |

| | |
|---|---|
| ^{∗}Comparative | |

To test the effect of the acrylic polymer P1 on oriented PVC pipe formulations as compared against blank formulation C1 (i.e., containing no additive), tensile bars as prepared in Example 4 were evaluated for one dimensional tensile elongation at 100°C and a strain rate of 50 in/min until failure. Before testing, the samples were conditioned inside a 3119-406 Environment Chamber to ensure they reached the desired temperature of 100°C. After conditioning, the Type V tensile bars were strained using an Instron 8872 Servo-Hydraulic Testing System with 25kN Dynacell load cell following the Type V sample geometry in accordance with ASTM D638.

The results in Table 7 demonstrate that example E6 containing acrylic copolymer P1 provides an oriented PVC pipe formulation exhibiting a significant increase in the elongation at break value at a given loading, even at a strain rate of 50 in/min.

### Example 7

### Tensile Elongation Characterization of Oriented PVC

### Formulations at 115°C and 20 in/min Strain Rate

PVC formulations as prepared in Example 4 were evaluated for tensile elongation at 115°C and a 20 in/min strain rate as shown in Table 8.

**Table 8. Elongation at Break at 115°C and 20 in/min**

| **Sample** | **Elongation at Break (%)** |
|---|---|
| C1^{∗} | 143.8 |
| E6^{∗} | 429.9 |

| | |
|---|---|
| ^{∗}Comparative | |

To test the effect of the exemplary acrylic polymer P1 on oriented PVC pipe formulations as compared against blank formulation C1 (i.e., containing no additive), tensile bars as prepared in Example 4 were evaluated for one dimensional tensile elongation at 115°C and a strain rate of 20 in/min until failure. Before testing, the samples were conditioned inside a 3119-406 Environment Chamber to ensure they reached the desired temperature of 115°C. After conditioning, the Type V tensile bars were strained using an Instron 8872 Servo-Hydraulic Testing System with 25kN Dynacell load cell following the Type V sample geometry in accordance with ASTM D638.

The results in Table 8 demonstrate that example E6 containing acrylic copolymer P1 provides an oriented PVC pipe formulation exhibiting a significant increase in the elongation at break value at a given loading, even at a high temperature of 115°C.

## Claims

1. A method for improving the melt strength of a thermoplastic polymer composition comprising a polyvinyl chloride formulation during an orientation process, comprising:
adding an acrylic copolymer to the thermoplastic polymer composition, wherein the acrylic copolymer comprises polymerized units derived from (i) 82 weight % of methyl methacrylate monomers, and (ii) 18 weight % of butyl acrylate monomers, based on the total weight of monomers in the acrylic copolymer, wherein the acrylic copolymer is present in the thermoplastic composition in an amount of from 8 to 12 weight %, based on the total weight of the thermoplastic composition, and has a M*_{w}*/GPC-PS of 4 × 10⁶ g/mol or more, wherein M*_{w}*/GPC-PS refers to the weight average molecular weight as measured against polystyrene calibration standards via gel permeation chromatography with a refractive index detector following ASTM D5296-11 (2011), and using tetrahydrofuran as the mobile phase and diluent.

2. The method according to claim 1, wherein the polyvinyl chloride formulation comprises a polyvinyl chloride and a component selected from the group consisting of internal lubricants, external lubricants, stabilizers, inorganic fillers, and combinations of these.

3. The method according to claim 1, wherein the acrylic copolymer has a M*_{w}*/GPC-PS of 5 × 10⁶ g/mol or more.

4. The method according to claim 1, wherein the acrylic copolymer has a M*_{w}*/GPC-PS of 6 × 10⁶ g/mol or more.

## Patentansprüche

1. Ein Verfahren zum Verbessern der Schmelzfestigkeit einer thermoplastischen Polymerzusammensetzung, die eine Polyvinylchloridformulierung beinhaltet, während eines Ausrichtungsvorgangs, beinhaltend:
Hinzugeben eines Acrylcopolymers zu der thermoplastischen Polymerzusammensetzung, wobei das Acrylcopolymer polymerisierte Einheiten beinhaltet, die, bezogen auf das Gesamtgewicht der Monomere in dem Acrylcopolymer, (i) zu 82 Gew.-% von Methylmethacrylatmonomeren und (ii) zu 18 Gew.-% von Butylacrylatmonomeren abgeleitet sind, wobei das Acrylcopolymer in der thermoplastischen Zusammensetzung, bezogen auf das Gesamtgewicht der thermoplastischen Zusammensetzung, in einer Menge von 8 bis 12 Gew.-% vorhanden ist und ein M*_{w}*/GPC-PS von 4 × 10⁶ g/mol oder mehr aufweist, wobei sich M*_{w}*/GPC-PS auf das gewichtsmittlere Molekulargewicht, wie mittels Gelpermeationschromatographie mit einem Brechungsindex-Detektor nach ASTM D5296-11 (2011) und unter Verwendung von Tetrahydrofuran als die mobile Phase und Verdünnungsmittel gegen Polystyrolkalibrierungsstandards gemessen, bezieht.

2. Verfahren gemäß Anspruch 1, wobei die Polyvinylchloridformulierung ein Polyvinylchlorid und eine Komponente, die aus der Gruppe ausgewählt ist, die aus internen Schmiermitteln, externen Schmiermitteln, Stabilisatoren, anorganischen Füllstoffen und Kombinationen von diesen besteht, beinhaltet.

3. Verfahren gemäß Anspruch 1, wobei das Acrylcopolymer ein M*_{w}*/GPC-PS von 5 × 10⁶ g/mol oder mehr aufweist.

4. Verfahren gemäß Anspruch 1, wobei das Acrylcopolymer ein M*_{w}*/GPC-PS von 6 × 10⁶ g/mol oder mehr aufweist.

## Revendications

1. Un procédé pour l'amélioration de la résistance à l'état fondu d'une composition de polymère thermoplastique comprenant une formulation de polychlorure de vinyle durant un processus d'orientation, comprenant :
l'ajout d'un copolymère acrylique à la composition de polymère thermoplastique, où le copolymère acrylique comprend des unités polymérisées dérivées (i) de 82 % en poids de monomères de méthacrylate de méthyle, et (ii) de 18 % en poids de monomères d'acrylate de butyle, rapporté au poids total de monomères dans le copolymère acrylique, où le copolymère acrylique est présent dans la composition thermoplastique en une quantité allant de 8 à 12 % en poids, rapporté au poids total de la composition thermoplastique, et a une M*_{w}*/GPC-PS de 4 × 10⁶ g/mol ou plus, où M_{w}/GPC-PS fait référence à la masse moléculaire moyenne en poids telle que mesurée par rapport à des normes d'étalonnage de polystyrène par le biais d'une chromatographie par perméation de gel avec un détecteur à indice de réfraction suivant l'ASTM D5296-11 (2011), et en utilisant du tétrahydrofurane comme phase mobile et diluant.

2. Le procédé selon la revendication 1, où la formulation de polychlorure de vinyle comprend un polychlorure de vinyle et un constituant sélectionné dans le groupe consistant en des lubrifiants internes, des lubrifiants externes, des stabilisants, des charges inorganiques, et des combinaisons de ceux-ci.

3. Le procédé selon la revendication 1, où le copolymère acrylique a une M*_{w}*/GPC-PS de 5 × 10⁶ g/mol ou plus.

4. Le procédé selon la revendication 1, où le copolymère acrylique a une M*_{w}*/GPC-PS de 6 × 10⁶ g/mol ou plus.
